# EUROPEAN PATENT APPLICATION

(11) **EP 2 518 450 A1**
(43) Date of publication of application: **31.10.2012**
(21) Application number: 10839359.6
(22) Date of filing: 20.12.2010
(51) Int. Cl.: G01D 5/244, F02D 45/00

(54) **ABNORMALITY DETERMINATION DEVICE FOR ROTATION SENSOR**

(30) Priority: 24.12.2009 JP 2009292731
(71) Applicant: Toyota Jidosha Kabushiki Kaisha, Toyota-shi, Aichi 471-8571 (JP)
(72) Inventor: UCHIDA, Akito, Toyota-shi Aichi 471-8571 (JP); NAKAMURA, Yoshifumi, Toyota-shi Aichi 471-8571 (JP); YOSHIHARA, Masatomo, Toyota-shi Aichi 471-8571 (JP); MASUDA, Satoshi, Kariya-shi Aichi 448-8661 (JP)
(74) Representative: Albutt, Anthony John
(86) International application number: PCT/JP2010/072922
(87) International publication number: WO 2011/078129

(57) **Abstract**

Provided is an abnormality determination device for a rotation sensor for detecting the rotation of a crankshaft. The rotation sensor comprises a sub sensor and a main sensor each of which outputs a pulsed signal every time the rotation body rotates by a predetermined angle. The rotation sensor is configured to, when the condition that the output signal of the sub sensor has a predetermined value and the output signal of the main sensor has changed is met, output a pulse signal in a different output form according to the direction of change of the output signal of the main sensor when the condition is met. The abnormality determination device is provided with an electronic controller which determines that the rotation sensor is abnormal on the basis of the fact that the output form of one pulse signal and the output form of the other pulse signal of two pulse signals outputted continuously from the rotation sensor within a determination period in which the crankshaft rotates in only a predetermined direction are different.

## Description

### FIELD OF THE INVENTION

The present invention relates to an abnormality determination device that determines the occurrence of an abnormality in a rotation sensor that outputs a pulse signal in accordance with a rotation direction of a rotational body whenever the rotational body is rotated by a predetermined angle.

### BACKGROUND ART

In recent years, to reduce fuel consumption and decrease emission, a control for intermittently stopping the operation of an internal combustion engine when driving a vehicle (automatic stop restart control) has been proposed and applied to hybrid vehicles, which use an internal combustion engine and an electric motor as vehicle driving sources, and vehicles that temporarily stop the operation of the internal combustion engine when stopping at an intersection or the like. In such a vehicle, when the internal combustion engine is automatically stopped by the automatic stop restart control, accurate recognition of the rotational angle of an output shaft of the internal combustion engine allows for engine control (fuel injection control etc.) to be correctly performed when the internal combustion engine is subsequently restarted. This properly performs and readily completes the restarting of the internal combustion engine.

The output shaft of the internal combustion engine does not always rotate in the same direction and may temporarily rotate in a direction (reverse direction) opposite to a direction of normal operation (normal direction) when the rotation of the output shaft is being stopped or has been stopped. Thus, when a rotation sensor that detects only the rotational amount is employed as the rotation sensor that detects the rotational angle of the output shaft of the internal combustion engine, reverse rotation of the output shaft cannot be recognized from the output signal of the rotation sensor. This produces a difference between the rotational angle of the output shaft of the internal combustion engine detected by the rotation sensor and the actual rotational angle. Accordingly, in such a case, proper restarting of the internal combustion engine may be hindered.

Thus, for example, Patent Document 1 proposes a rotation sensor that outputs a pulse signal having an output width that differs in accordance with the rotation direction of an output shaft of an internal combustion engine whenever the output shaft is rotated by a predetermined angle.

The rotation sensor of Document 1 includes a disk-shaped signal rotor attached to the output shaft of the internal combustion engine and two sensor portions (first sensor portion and second sensor portion) arranged in the vicinity of the signal rotor. Projections are formed on the outer circumference of the signal rotor at predetermined angular intervals, and the two sensor portions each output a pulse signal whenever a projection of the signal rotor passes by the vicinity of the sensor portion. The sensor portions are set to output pulse signals having phases that are shifted from each other. The rotation sensor outputs a pulse signal corresponding to the signal from each of the sensor portions. An output width of this pulse signal is set to vary depending on the relationship between a shift mode of the output signal of the second sensor portion when the output signal shifts (shifts from low signal to high signal [rises] or shifts from high signal to low signal [falls]) and an output value (high signal or low signal) of the first sensor portion. The rotation sensor in Document 1 can recognize the rotational amount of the engine output shaft from the number of pulse signals from the rotation sensor as well as the rotation direction of the engine output shaft from the width of the pulse signal thereby allowing for the rotational angle of the engine output shaft to be accurately obtained while taking into consideration rotation in the reverse direction.

However, when an abnormality such as the breakage of a signal line that transmits the pulse signal occurs in the above rotation sensor, for example, detection of the rotational angle of the output shaft of the internal combustion engine is hindered. Thus, Document 1 proposes an abnormality determination device that determines the occurrence of an abnormality in the rotation sensor. The abnormality determination device of Document 1 detects the voltage level of the pulse signal and determines that an abnormality is occurring in the rotation sensor when the pulse signal continues to be a high signal or a low signal for a predetermined time or longer.

### PRIOR ART DOCUMENT

### PATENT DOCUMENT

Patent Document 1: Japanese Laid-Open Patent Publication No. 2005-233622 (pages 5 to 6 and Figs. 2 and 3)

### SUMMARY OF THE INVENTION

### PROBLEMS TO BE SOLVED BY THE INVENTION

In the above rotation sensor, depending on the abnormality that occurs, for example, when an abnormality occurs in which the output signal of the first sensor portion does not shift from a certain value (high signal or low signal), a pulse signal may be continuously and cyclically output as the output shaft of the internal combustion engine rotates.

In such a case, the reliability of the pulse signal output from the rotation sensor is extremely low, and a deviation in the rotational angle of the output shaft of the internal combustion engine, which is recognized from the pulse signal, from the actual rotational angle cannot be avoided. Thus, it is desirable that the occurrence of the abnormality be detected and properly addressed. However, the abnormality determination device in Patent Document 1 determines the occurrence of an abnormality under the assumption that the voltage level of the pulse signal has not been shifted for a predetermined time. Thus, the occurrence of such an abnormality cannot be determined.

Such a problem is not limited to a rotation sensor that outputs a pulse signal having a width that differs in accordance with the rotation direction of an output shaft of an internal combustion engine. The same problem may arise even in a rotation sensor that changes other forms of output, such as the voltage level, when a pulse signal is continuously and cyclically output as the output shaft of the internal combustion engine rotates. Moreover, the above problem is not limited to rotation sensors that detect the rotation shaft of an internal combustion engine and may arise in the same manner in a rotation sensor that detects the rotation of any rotational body.

It is an object of the present invention to provide an abnormality determination device that accurately determines the occurrence of an abnormality in a rotation sensor.

### MEANS FOR SOLVING THE PROBLEM

To achieve the above object, one aspect of the present invention provides an abnormality determination device for a rotation sensor that detects rotation of a rotational body. The rotation sensor includes a first sensor portion and a second sensor portion that output a pulse signal whenever the rotational body is rotated by a predetermined angle. The first and second sensor portions output signals having phases shifted from each other. The rotation sensor is configured so that when a condition is satisfied where an output signal of the first sensor portion is a predetermined value and an output signal of the second sensor is shifted, the rotation sensor outputs a pulse signal in a form that changes in accordance with a shifting direction of the output signal of the second sensor portion. The abnormality determination device includes a determination unit that determines that the rotation sensor is abnormal when an output form of one of two pulse signals consecutively output from the rotation sensor differs from an output form of the other one of the pulse signals during a determination period in which the rotational body rotates only in a predetermined direction.

In the above configuration, if an abnormality occurs in which the output signal of the second sensor portion does not shift from a preset predetermined value (for example, high signal or low signal), when the rotational body rotates in one direction, the rotation sensor alternately output pulse signals in difference forms. In the above configuration, the occurrence of an abnormality is determined when the rotation sensor alternately output pulse signals in different output modes.

In the determination according to claim 1, the determination unit counts a determination number in which the output form of one of the two pulse signals differs from the output form of the other one during the determination period and determines that the rotation sensor is abnormal when the determination period is greater than or equal to a threshold value.

In the above configuration, when the rotation sensor alternately output pulse signals of different output forms incidentally due to the influence of noise or the like, erroneous determination of the rotation sensor being abnormal is suppressed, and abnormality of the rotation sensor is accurately determined.

In the invention according to claim 1 or 2, the rotational body is an output shaft of an internal combustion engine, and the determination period is a period in which the output shaft rotates only in a normal direction.

In the above configuration, abnormality of the rotation sensor is accurately determined during the determination period in which the output shaft of the internal combustion engine rotates only in the normal direction when the rotation sensor alternately outputs a pulse signal of an output form indicating normal rotation and a pulse signal of an output form indicating reverse rotation.

In the invention according to claim 4, the determination period is a period in which the output shaft rotates at a lower limit rotation speed or greater in which the output shaft does not rotate in a reverse direction.

In the above configuration, the output shaft of the internal combustion engine temporarily rotates in the reverse direction when the internal combustion engine stops operating. However, when the rotation speed of the output shaft (engine rotation speed) increases to a certain level, the output shaft does not rotate in the reverse direction. Thus, as in the above configuration, the period in which the output shaft rotates at a lower limit rotation speed or greater in which the output shaft does not rotate in a reverse direction can be set as the determination period in which the output shaft rotates only in the normal direction.

In the invention according to claim 4, the output shaft is rotated in a normal direction by a starter motor when the internal combustion engine is started, and the determination period is a start period in which the starter motor is in a drive state.

Normally, when the starter motor is driven to start the internal combustion engine, the output shaft of the internal combustion engine is rotated in the normal direction. Thus, as in the above configuration, a start period in which the starter motor is in a drive state can be set as the determination period in which the output shaft rotates only in the normal direction.

In the invention according to claim 2, the rotational body is an output shaft of an internal combustion engine, the output shaft is rotated in a normal direction by a starter motor when the internal combustion engine is started, the determination period includes a first determination period, in which the output shaft rotates at a lower limit rotation speed or greater in which the output shaft does not rotate in a reverse direction, and a second determination period, which is a start period in which the starter motor is in a drive state. The threshold value includes a first threshold value, which corresponds to the first determination period, and a second threshold value, which corresponds to the second determination period. The first threshold value is greater than the second threshold value.

In the above configuration, when a larger value is set as the threshold value, the determination number has to become large for the rotation sensor to be determined as being abnormal, and the occurrence of an abnormality can thus be determined with high accuracy. However, this increases the time required for determining that the rotation sensor is abnormal. Thus, a fail-safe process cannot be readily executed when the rotation sensor is abnormal. This lengthens the starting time when starting the internal combustion engine. In this regard, in the above configuration, the threshold value during the predetermined rotation speed period is set to be greater than the threshold value during the starting period. Thus, abnormality of rotation sensor in the predetermined rotation speed period can be accurately determined thereby allowing the fail-safe process to be executed and suppressing lengthening of the starting period. In the above configuration, abnormality of the rotation sensor can be properly executed in the predetermined rotation speed period and the starting period.

In the invention according to claim 5 or 6, the internal combustion engine is installed as a drive source in a vehicle, and the start period is a period in which the starter motor is in the drive state and a transmission connected to the internal combustion engine is in a neutral state cutting off power transmission.

For example, when restarting a vehicle internal combustion engine on an ascending road, the vehicle may move rearward due to its weight such as when the drive is not depressing the brake pedal. In such a case, the output shaft of the internal combustion engine may rotate in the reverse direction if the automatic transmission is not in a neutral state.

In this regard, in the above configuration, a period in which the starter motor is in a drive state and the automatic transmission is in a neutral state is set as the start period. Thus, the start period is a period in which the starter motor is in a drive state and the transmission is in a neutral state. This allows the period in which the output shaft of the internal combustion engine rotates only in the normal direction to be set as the start period, that is, the determination period.

In the invention according to claim 5 or 6, the internal combustion engine is installed as a drive source in a vehicle, and the start period is a period in which the starter motor is in the drive state and the vehicle is in a stopped state.

When the vehicle is in a stopped state, the vehicle is not in a state in which it moves rearward due to its weight. Thus, it can be determined that a phenomenon in which the output shaft of the internal combustion engine rotates in the reverse direction due to rearward movement of the vehicle is not occurring.

In the above configuration, a period in which the starter motor is in the drive state and the vehicle including the internal combustion engine is in a stopped state is set as the start period. This ensures that the period in which the output shaft of the internal combustion engine rotates only in the normal direction is set as the start period, that is, the determination period.

The invention according to any one of claims 3 to 8 may further include a control unit, which executes automatic stop restart control for automatically stopping the internal combustion engine when a predetermined stop condition is satisfied and automatically starting the internal combustion engine when a predetermined restarting condition is satisfied, and a prohibition unit, which prohibits execution of the automatic stop restart control when abnormality of the rotation sensor is detected in the determination period.

The above configuration avoids restarting of the internal combustion engine based on a rotation angle of the output shaft of the internal combustion engine calculated by the rotation sensor in which an abnormality has occurred, that is, based on a rotation angle having low reliability. This suppresses problems such as a starting failure.

### BRIEF DESCRIPTION OF THE DRAWINGS

Fig. 1 is a schematic diagram showing the structure of a vehicle including an abnormality determination device for a rotation sensor according to one embodiment of the present invention.
Fig. 2 is a flowchart showing the procedures in an automatic stopping process executed by the abnormality determination device of Fig. 1.
Fig. 3 is a flowchart showing the procedures in a restarting process executed by the abnormality determination device of Fig. 1.
Fig. 4 is a table showing the relationship of a shift mode of an output signal of a main sensor, an output signal of a sub-sensor, and information on a rotation direction of a crankshaft output from an output device.
Fig. 5 is a timing chart showing the transition of each output signal during normal rotation of the crankshaft.
Fig. 6 is a timing chart showing the transition of each output signal during reverse rotation of the crankshaft.
Fig. 7 is a timing chart showing the transition of each output signal when an abnormality occurs in the rotation sensor.
Fig. 8 is a flowchart showing the procedures of an abnormality determination process executed by the abnormality determination device of Fig. 1.
Fig. 9 is a timing chart showing one example of the execution of the abnormality determination device.
Fig. 10 is a flowchart showing the procedures of an abnormality determination process in a further embodiment.

### EMBODIMENTS OF THE INVENTION

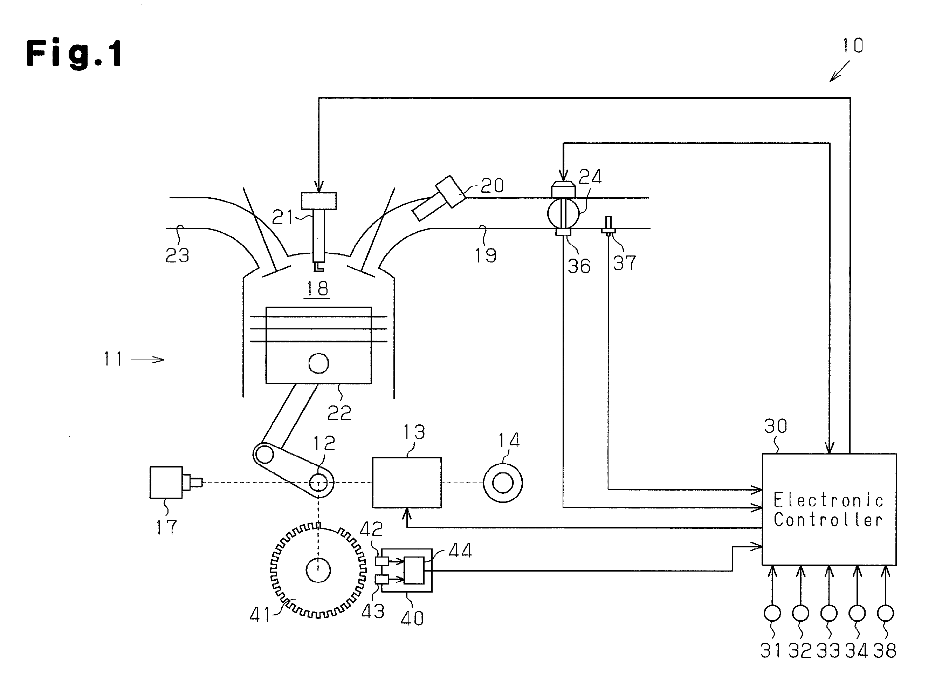

One embodiment of the present invention will now be described. Fig. 1 schematically shows the structure of a vehicle including an abnormality determination device for a rotation sensor 40 in the present embodiment.

As shown in Fig. 1, an internal combustion engine 11, which serves as a driving source, is mounted on a vehicle 10. Driving wheels 14 are connected by an automatic transmission 13 to a crankshaft 12, which is an output shaft (rotational body) of the internal combustion engine 11. Power generated by the internal combustion engine 11 is transmitted by the automatic transmission 13 to the driving wheels 14.

A starter motor 17 is connected to the crankshaft 12. The starter motor 17 functions as an electric motor when a vehicle occupant operates a switch (not shown) to start the internal combustion engine 11 and when the internal combustion engine 11 is automatically started. In detail, the starter motor 17 is driven to forcibly rotate and drive (crank) the crankshaft 12 of the internal combustion engine 11 and adds auxiliary torque to the crankshaft 12 to start the internal combustion engine 11.

A combustion chamber 18 of the internal combustion engine 11 draws in air through an intake passage 19 and is supplied with fuel injected from a fuel injection valve 20. Then, an ignition plug 21 ignites an air-fuel mixture formed from the drawn-in air and injected fuel. This burns the air-fuel mixture, reciprocates a piston 22, and rotates the crankshaft 12 of the internal combustion engine 11. The burned air-fuel mixture is discharged as exhaust to an exhaust passage 23 from the combustion chamber 18 of the internal combustion engine 11.

The abnormality determination device of the present embodiment includes an electronic controller 30 that executes various controls to drive the vehicle 10. The electronic controller 30 includes a central processing unit (CPU), which executes various computation processes related to the various controls, a non-volatile memory (ROM), which stores programs and data required for the computation processes, a volatile memory (RAM), which temporarily stores computation results of the CPU, and an input port and output port that input and output a signal from and to the exterior.

Various sensors are connected to the input port of the electronic controller 30. Examples of such sensors include a speed sensor 31, which detects a traveling speed SPD of the vehicle 10, an accelerator operational amount sensor 32, which detects the depressing amount of an accelerator pedal (not shown) (accelerator depressing amount AC), and an idle switch 33, which detects whether or not the accelerator pedal is depressed. Examples of the sensors also include a brake switch 34, which detects whether or not a brake pedal (not shown) is depressed, a throttle sensor 36, which detects an open degree (throttle open degree TA) of a throttle valve 24 arranged in the intake passage 19, and an air amount sensor 37, which detects the amount of air passing through the intake passage 19 (passage air amount GA). Further, examples of the sensors include a coolant temperature sensor 38, which detects the temperature THW of the coolant in the internal combustion engine 11, and the rotation sensor 40, which detects the rotation speed (engine rotation speed) and rotational angle (crank angle "°CA") of the crankshaft 12.

The electronic controller 30 recognizes operational states of the internal combustion engine 11, such as the engine rotation speed and an engine load KL, from the output signals of the various sensors. The engine load KL is calculated from the engine rotation speed and the amount of air drawn into the internal combustion engine 11, which is obtained from the accelerator depressing amount AC, the throttle open degree TA, and the passage air amount GA. In accordance with the operational states of the internal combustion engine 11 recognized in this manner, the electronic controller 30 outputs command signals to various driving circuits connected to the output port. In this manner, the electronic controller 30 executes various types of control, such as a control for operating the automatic transmission 13, a control for driving the starter motor 17, a control for operating the fuel injection valve 20 (fuel injection control), a control for operating the ignition plug 21 (ignition timing control), and a control for operating the throttle valve 24 (throttle control).

In order to improve fuel economy and reduce emissions, the vehicle 10 of the present embodiment includes an automatic stop-start function that automatically stops the internal combustion engine 11 when the vehicle 10 stops at an intersection or the like and automatically starts the automatically stopped internal combustion engine 11 at any timing so that the vehicle 10 can start to move.

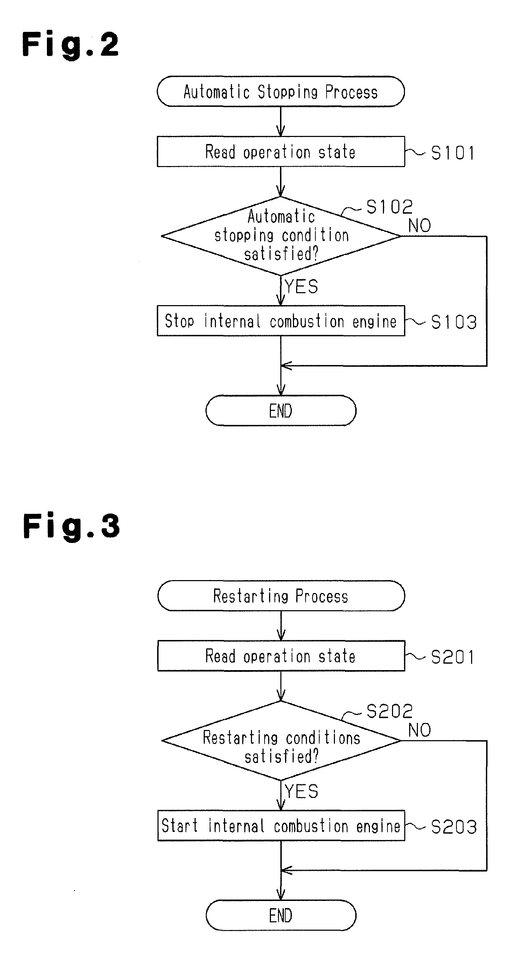

The processing of the automatic stop restart control in the present embodiment will now be described with reference to Figs. 2 and 3. Fig. 2 is a flowchart showing the procedures of a process for automatically stopping the internal combustion engine 11 (automatic stopping process), and Fig. 3 is a flowchart showing the procedures of a process for automatically starting the internal combustion engine 11 (restarting process). The series of processes shown in the flowcharts are executed by the electronic controller 30 as interruption processes in predetermined cycles. In the present embodiment, the electronic controller 30 functions as a control unit that executes the automatic stop restart control and a prohibition unit that prohibits the execution of the automatic stop restart control.

First, referring to Fig. 2, the procedures of the automatic stopping process will be described.

As shown in Fig. 2, in this process, the electronic controller 30 first reads the operational states of the vehicle 10 and the internal combustion engine 11 through the output signals of the various sensors (step S101) and determines whether or not automatic stopping conditions have been satisfied based on the operational states (step S102). Specifically, for example, when all of conditions listed below, [condition 1] to [condition 5], are satisfied, it is determined that the automatic stopping conditions have been satisfied.
[Condition 1] The warm-up of the internal combustion engine 11 has been completed (the coolant temperature THW is higher than a coolant temperature lower limit value).
[Condition 2] The accelerator pedal is not being depressed (the idle switch is "ON").
[Condition 3] The brake pedal is being depressed (the brake switch is "ON").
[Condition 4] The vehicle 10 is stopped.
[Condition 5] After [Condition 1] to [Condition 4] are all satisfied, there is no history of the automatic stop of the internal combustion engine 11 being performed.

When any one of [condition 1] to [condition 5] is not satisfied (NO in step S102), it is determined that the automatic stopping conditions are not satisfied, that is, the conditions for automatically stopping the internal combustion engine 11 is not satisfied, and the present process is temporarily terminated. Then, when the vehicle 10 stops at an intersection or the like and it is determined that the automatic stopping conditions have been satisfied (YES in step 102), the operation of the internal combustion engine 11 is stopped, for example, by stopping the supply of fuel to the internal combustion engine 11 (step S103). Then, the present process is temporarily terminated.

Next, the procedures of the restarting process will be described with reference to Fig. 3.

As shown in Fig. 3, in this process, the electronic controller 30 first reads the operational states of the vehicle 10 and the internal combustion engine 11 through the output signals of the various sensors (step S201) and determines whether or not restarting conditions have been satisfied based on the operational states (step S202). Specifically, when any one of the [condition 1] to [condition 4] is not satisfied under the condition that the internal combustion engine 11 is in a state stopped by the automatic stopping process, it is determined that the restarting conditions have been satisfied.

When the internal combustion engine 11 is not automatically stopped or when [condition 1] to [condition 4] are all satisfied (NO in step S202) even though the internal combustion engine 11 is automatically stopped, it is determined that the restarting conditions are not satisfied, that is, the conditions for restarting the internal combustion engine 11 are not satisfied, and the present process is temporarily terminated. Then, when any one of the [condition 1] to [condition 4] becomes unsatisfied in the automatic stop state of the internal combustion engine 11 (YES in step S202), it is determined that the restarting conditions are satisfied and the process for restarting the internal combustion engine 11 is executed (step S203). Specifically, the starter motor 17 is driven to start the cranking operation. In addition, a known fuel injection control and ignition timing control are executed to restart the internal combustion engine 11. Then, the present process is temporarily terminated.

Here, in the vehicle 10 (refer to Fig. 1), accurate recognition of the crank angle of the crankshaft 12 during the automatic stop of the internal combustion engine 11 in the automatic stopping process allows for engine control (fuel injection control, ignition timing control, and so on) to be properly executed when restarting the internal combustion engine 11 in a subsequent restarting process. This properly performs and readily completes the restarting of the internal combustion engine 11.

The crankshaft 12 does not always rotate in the same direction and may temporarily rotate in a direction (reverse direction) opposite to a direction (normal direction) of normal operation of the internal combustion engine 11 when the rotation of the crankshaft 12 is being stopped or has been stopped. Thus, when the employed rotation sensor is one that outputs only a signal corresponding to the rotational amount of the crankshaft 12, the rotation of the crankshaft 12 in the reverse direction cannot be recognized from the output signal of the system. This produces a difference between the crank angle obtained from the output signal of the rotation sensor and the actual crank angle.

In the present embodiment, the employed rotation sensor 40 detects the rotational amount of the crankshaft 12 as well as the rotation direction to output a signal (crank angle NE) corresponding to the detected rotational amount and rotation direction. The electronic controller 30 obtains the crank angle from the crank signal NE to accurately obtain the crank angle taking into consideration of rotation of the crankshaft 12 in the reverse direction.

In the present embodiment, reverse rotation of the crankshaft 12 is a phenomenon that occurs when the crankshaft 12 is stopping or has been stopped. Thus, the electronic controller 30 detects rotation in the reverse direction only during a period in which the phenomenon may occur (specifically, reverse rotation detection period). More specifically, the electronic controller 30 validates a signal that indicates reverse rotation in the output signal of the rotation sensor 40 during the reverse rotation detection period. Further, the electronic controller 30 invalidates a signal indicating reverse rotation during a period other than the reverse rotation detection period. The reverse rotation detection period is set as a period from when a [start condition], which is shown below, is satisfied to when an [end condition], which is shown below, is satisfied.

[Start Condition] Injection of fuel from the fuel injection valve 20 is stopped to automatically stop the internal combustion engine 11, and the engine rotation speed is less than or equal to a predetermined speed (for example, 400 rev/min).

[End Condition] After the starter motor 17 is operated to restart the internal combustion engine 11, the crankshaft 12 is rotated in the normal direction by a predetermined number of rotations (for example, one rotation) or greater.

Next, the specific structure of the rotation sensor 40 and its peripheral members will be described.

A disk-shaped signal rotor 41 that rotates integrally with the crankshaft 12 is attached to the crankshaft 12 of the internal combustion engine 11. Projections 41 a are formed on the outer circumference of the signal rotor 41 at intervals of a predetermined angle (10°CA). The signal rotor 41 includes a so-called missing-teeth portion obtained where projections (two projections located at continuous positions) are missing. The rotation sensor is arranged in the vicinity of the signal rotor. The rotation sensor includes two sensors (a main sensor 42 and a sub-sensor 43), which are arranged in the vicinity of the signal rotor 41, and an output device 44, which outputs a signal (crank signal NE) corresponding to changes in the crank angle. In the present embodiment, the main sensor 42 functions as a second sensor portion, and the sub-sensor 43 functions as a first sensor portion.

The main sensor 42 and the sub-sensor 43 each output a pulse signal whenever a projection of the signal rotor 41 passes by the vicinity of the sensors 42 and 43 as the crankshaft 12 rotates. Further, the main sensor 42 and the sub-sensor 43 are attached at positions where the phases of their output signals are shifted from each other by a predetermined angle (5°CA). The output device 44 retrieves the output signals of the main sensor 42 and the sub-sensor 43 to form and output the crank signal NE, which shifts as the crank angle changes, from the output signals.

The crank signal NE is formed based on the concept described below.

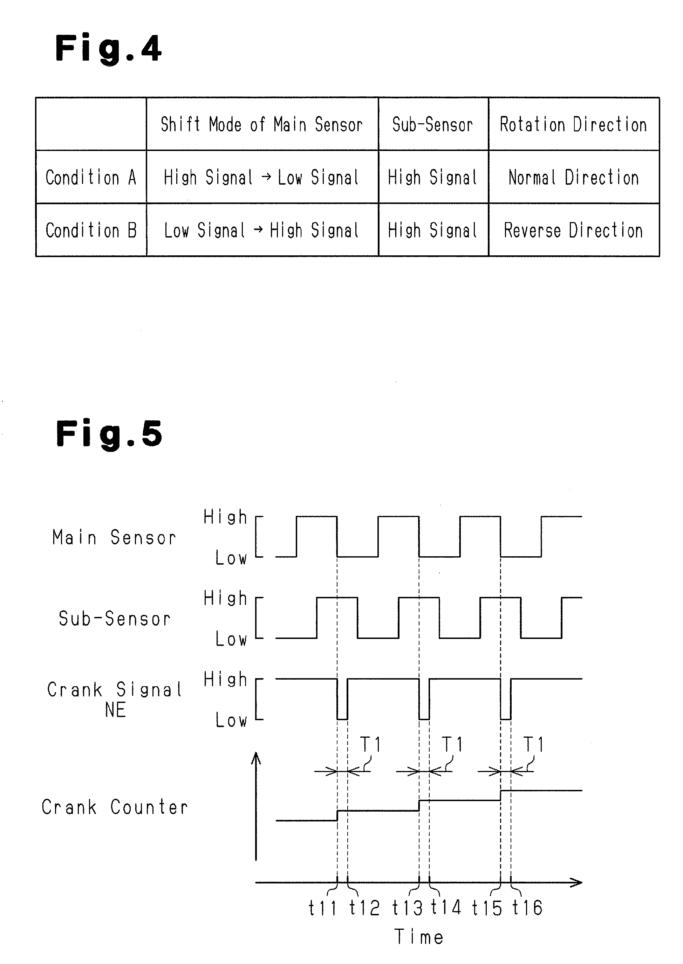

Fig. 4 shows the relationship of a shift mode of the output signal of the main sensor 42 when the output signal shifts, an output signal of the sub-sensor 43, and information on the rotation direction of the crankshaft 12 output from the output device 44.

As shown by [Condition A] in Fig. 4, if the output signal of the sub-sensor 43 has a preset value, or is a high signal (high level) when the output signal of the main sensor 42 shifts (falls) from a high signal to a low signal, it is detected that the crankshaft 12 has rotated in the normal direction and reached one of the crank angles arranged in the predetermined angular intervals. As shown by [Condition B] in Fig. 4, if the output signal of the sub-sensor 43 is a high signal when the output signal of the main sensor 42 shifts (rises) from a low signal to a high signal, it is detected that the crankshaft 12 has rotated in the reverse direction and reached one of the crank angles arranged in the predetermined angular intervals. In this manner, in the present embodiment, when the condition in which the output signal of the sub-sensor 43 is a high signal and the output signal of the main sensor 42 has shifted is satisfied, it is detected that the crankshaft 12 has been rotated by the predetermined angle, and the rotation direction of the crankshaft 12 is detected based on the shifting direction of the output signal of the main sensor 42 when the condition is satisfied.

Then, the crank signal NE is generated and output as described below based on the output signals of the main sensor 42 and the sub-sensor 43.

Fig. 5 shows the relationship of the output signal of the main sensor 42, the output signal of the sub-sensor 43, and the crank signal NE when the crankshaft 12 rotates in the normal direction.

As shown in Fig. 5, the crank signal NE is shifted from a high signal to a low signal for a preset time T1 (for example, several tens of milliseconds) from timings when [Condition A] (refer to Fig. 4) is satisfied (times t11 to t12, t13 to t14, and t15 to t16).

The electronic controller 30 detects the crank angle by counting the number of the pulse signals forming the crank signal NE and obtaining a value corresponding to the crank angle (specifically, a count value of a crank counter shown in Fig. 5). In this case, whenever the crank signal NE shifts from a high signal to a low signal, the count value of the crank counter is incremented by "1" (times t11, t13, and t15). A larger count value of the crank counter indicates a greater crank angle, and a value corresponding to 720°CA becomes a value corresponding to 0°CA. Further, when detecting the passage of the missing-teeth portion, the electronic controller 30 determines that the crank angle has reached a reference angle (for example, 0°CA) and changes the count value of the crank counter to a value corresponding to the reference angle.

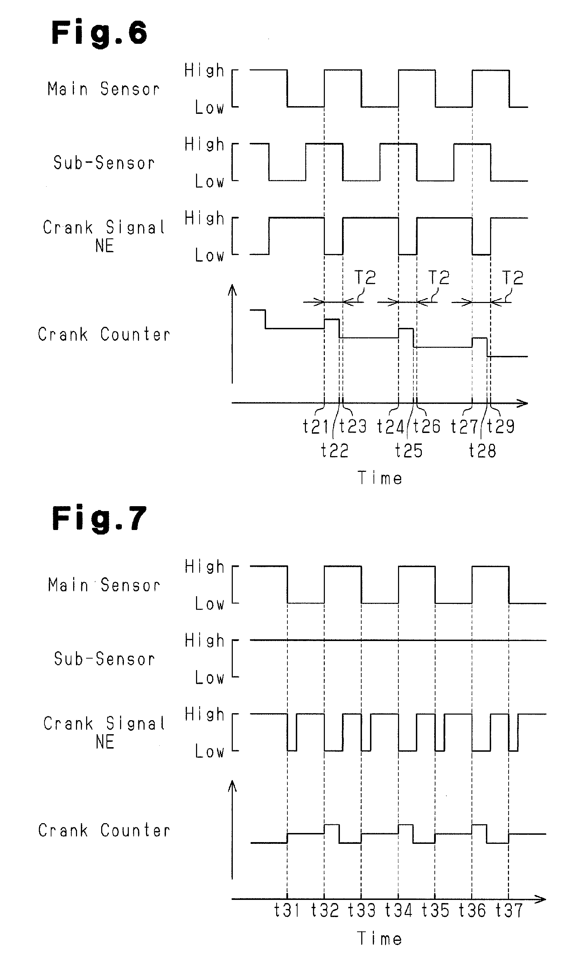

Fig. 6 shows the relationship of the output signal of the main sensor 42, the output signal of the sub-sensor 43, and the crank signal NE when the crankshaft 12 is rotating in the reverse direction.

As shown in Fig. 6, during reverse rotation of the crankshaft 12, the crank signal NE is shifted from a high signal to a low signal for a preset predetermined time T2 from a timing when the above [condition B] (refer to Fig. 4) is satisfied (times t21 to t23, t24 to t26, t27 to t29). The predetermined time T2 (for example, several hundreds of milliseconds) is set to be longer than the predetermined time T1 (refer to Fig. 5) when the crankshaft 12 is rotating in the normal rotation.

Further, during reverse rotation of the crankshaft 12, the electronic controller 30 obtains the count value of the crank counter in the following manner. First, when the crank signal NE shifts from a high signal to a low signal, the count value of the crank counter is temporarily incremented by "1" (times t21, t24, and t27). Then, when a period during which the crank signal NE is a low signal becomes greater than or equal to a determination value (where, predetermined time T1 < determination value < predetermined time T2) (times t22, t25, and t28), it is determined that a pulse width of the crank signal NE is a value indicating reverse rotation of the crankshaft 12, and "2" is subtracted from the count value of the crank counter. These series of operations decrement the count value of the crank counter by "1".

As shown in Fig. 7, when an abnormality occurs in which the output signal of the sub-sensor 43 does not shift from a high signal, during normal rotation of the crankshaft 12, signals indicating normal rotation of the crankshaft 12 and signals indicating reverse rotation of the crankshaft 12 are alternately output as the crank signal NE. In this case, the incrementing (times t31, t33, t35, t37) and decrementing of the count value (time t42, t44, t46) of the count value of the crank counter are alternately repeated. Thus, even though the crankshaft 12 is rotating in the normal direction, the count value does not increase. This results in a deviation of the crank angle detected by the electronic controller 30 from the actual crank angle. As a result, there is a possibility that the restarting of the internal combustion engine 11 cannot be readily completed.

Thus, in the present embodiment, a period during which the crankshaft 12 rotates only in the normal direction is set as a determination period. Further, a process (abnormality determination process) is executed to determine that the rotation sensor 40 is abnormal when, among two pulse signals (low signals) consecutively output from the output device 44 of the rotation sensor 40 during the determination period, one of the pulse signals (low signal) has a pulse width that differs from that of the other pulse signal (low signal).

When an abnormality occurs in which the output signal of the sub-sensor 43 does not shift from the high signal, and a pulse signal having an output width indicating normal rotation of the crankshaft 12 and a pulse signal having an output width indicating reverse rotation of the crankshaft 12 are alternately output from the rotation sensor 40, such a state is recognized through the abnormality determination process. This properly determines the occurrence of an abnormality.

During the determination period, abnormality of the rotation sensor 40 may be determined just based on the input of a pulse signal having an output width indicating reverse rotation during the determination period. However, when determining the occurrence of an abnormality only at a timing at which a pulse signal having an output width indicating normal rotation is output from the rotation sensor 40, the rotation sensor 40 may be erroneously determined as not having an abnormality. Further, depending on the execution interval of the abnormality determination, a pulse signal having an output width indicating normal rotation may always be output at the execution timing. In such a case, abnormality of the rotation sensor cannot be determined. In this regard, the present embodiment detects the occurrence of an abnormality in the rotation sensor accurately and at an early stage without relying on the execution timing or execution interval of the abnormality determination.

Based on such a determination, the occurrence of an abnormality in the rotation sensor 40 can be properly addressed.

The reason in which the determination of the occurrence of an abnormally is limited to the determination period in which the crankshaft 12 rotates only in the normal direction is as described below.

When the crankshaft 12 stops rotating, the compression and expansion of intake air filled in the combustion chamber 18 of the internal combustion engine 11 is alternately repeated. This produces a phenomenon in which the crankshaft 12 swings and moves alternately in the normal and reverse rotation directions, namely, a chattering phenomenon. When such a chattering phenomenon occurs, even when the sub-sensor 43 outputs a normal signal, the sub-sensor 43 actually repeats alternate normal rotation and reverse rotation. Thus, one of two pulse signals consecutively output from the rotation sensor 40 has an output width indicating normal rotation, and the other one of the pulse signals has an output width indicating reverse rotation. As a result, if the occurrence of an abnormality is determined based on just a state in which the output width of one of the two pulse signals differs from the output width of the other one of the pulse signals, when the chattering phenomenon occurs, the rotation sensor 40 is erroneously determined as having an abnormality.

Further, the output width of one of two pulse signals consecutively output from the rotation sensor 40 indicates formation rotation and the output width of the other one of the pulse signals indicates reverse rotation not only when a chattering phenomenon occurs but also when the crankshaft 12 stops rotating and its rotation switches from the forward direction to the reverse direction or from the reverse direction to the forward direction. Thus, in such a case, in the same manner as when a chattering phenomenon occurs, if the occurrence of an abnormally is determined based on just a state in which the output width of one of the two pulse signals differs from the output width of the other one of the pulse signals, the rotation sensor 40 is erroneously determined as having an abnormality.

In the present embodiment, the determination of an abnormality is limited to a period in which the crankshaft 12 rotates only in the normal direction, that is, during a period in which a chattering phenomenon or a phenomenon in which the rotation direction of the crankshaft 12 switches does not occur. This avoids erroneous determination that would be caused by such a phenomenon, and the determination of an abnormality in the rotation sensor 40 is performed with high accuracy.

In the present embodiment, such a period is set as the determination period, and a predetermined rotation speed period (first determination period) and a starting period (second determination period) are set as the determination period.

When the internal combustion engine 11 stops operating, the crankshaft 12 may temporarily rotate in the reverse direction. However, the crankshaft 12 will not rotate in the reverse direction when the engine rotation speed is relatively high. In this respect, in the present embodiment, a lower limit value (lower limit rotation speed [specifically, 400 rev/min]) of a speed range in which the crankshaft 12 does not rotate in the reverse direction is set beforehand. Further, a period in which the engine rotation speed is greater than or equal to the lower limit rotation speed (predetermined rotation speed period) is set as the first determination period.

When the starter motor 17 is being driven to start the internal combustion engine 11, the crankshaft 12 is rotating in the normal direction. Further, when restarting the internal combustion engine 11 on an ascending road, the vehicle 10 may move rearward due to its weight such as when the brake pedal is not being depressed. In such a case, the crankshaft 12 may rotate in the reverse direction if the automatic transmission 13, which is connected to the internal combustion engine 11, is not in a state cutting off the transmission of power (neutral state). Taking this into consideration, in the present embodiment, when starting the internal combustion engine 11, a period (starting period) in which the starter motor 17 is in a drive state and the automatic transmission 13 is in a neutral state is set as the second determination period. The neutral state refers to a state in which the crankshaft 12 is disconnected from the driving wheels 14.

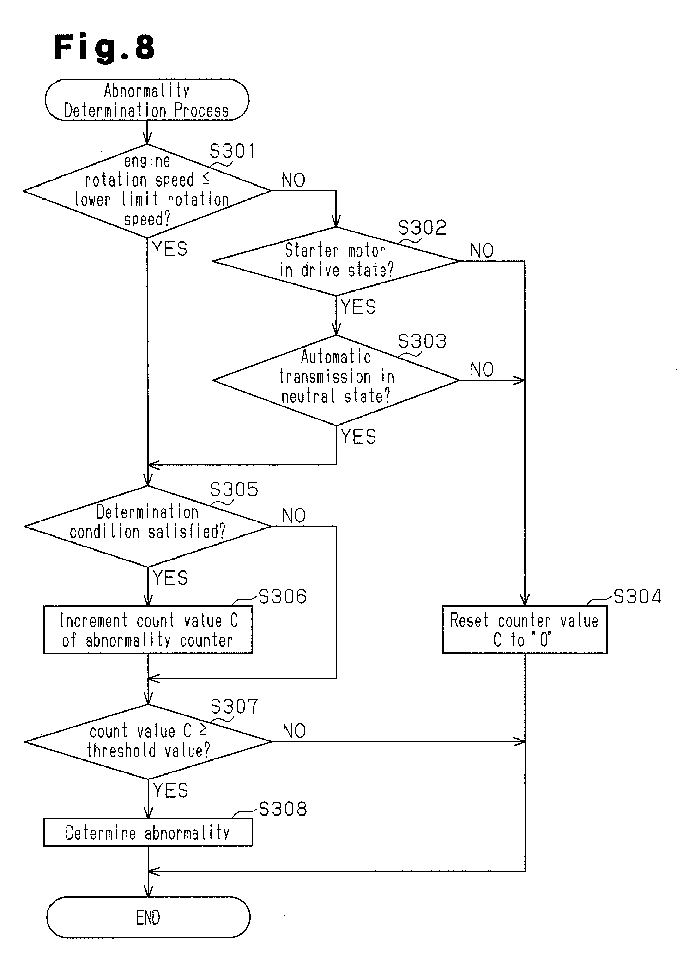

Fig. 8 is a flowchart showing the procedures of the abnormality determination process, and the series of processes shown in this flowchart is executed by the electronic controller 30, which serves as a determination unit, for every predetermined crank angle (for example, 30°CA).

As shown in Fig. 8, this process first determines whether or not the engine rotation speed is greater than or equal to a lower limit rotation speed (step S301). When the engine rotation speed is less than the lower limit rotation speed (NO in step S301), it is determined whether or not the starter motor 17 is in a drive state and the automatic transmission 13 is in a neutral state (steps S302 and S303). When the starter motor 17 is not in the drive state (NO in step S302) or when the automatic transmission 13 is not in a neutral state (NO in step S303), the determination period has not been reached. Thus, a count value C of an abnormality counter is reset to "0" (step S304). Then, the present process is temporarily terminated.

When the engine rotation speed is greater than or equal to the lower limit rotation speed (YES in step S301), it is determined that the first determination period has been reached. Further, even when the engine rotation speed is less than the lower limit rotation speed (NO in step S301), if the starter motor 17 is in a drive state and the automatic transmission 13 is in a neutral state (YES in step S302 and YES in step S303), the second determination period has been reached. When it is determined that the determination period has been reached, it is determined whether or not the following [Determination Condition] is satisfied (step S305).

[Determination Condition] The output width of one of two pulse signals consecutively output from the rotation sensor 40 indicates normal rotation, and the output width of the other pulse signal indicates reverse rotation.

Whenever a pulse signal (low signal) is input from the rotation sensor 40, the electronic controller 30 determines whether the output width of the pulse signal (low signal) indicates normal rotation or reverse rotation. Further, the electronic controller 30 stores the determination result for the present pulse input and the preceding pulse input. In the process of step S305, it is determined whether or not the [Determination Condition] is satisfied.

When the [Determination Condition] is satisfied (YES in step S305), the count value C of the abnormality counter is incremented (step S306), and when the [Determination Condition] is not satisfied (NO is step S305), the count value C is not incremented (the process of step S306 is skipped).

After manipulating the counter value C of the abnormality counter in this manner, it is determined whether or not the count value C is greater than or equal to a threshold value (e.g., "24") (step S307). When the count value C of the abnormality counter is less than the threshold value (NO in step S307), there is no determination that the rotation sensor 40 includes an abnormality (the process of step S308 is skipped), and the present process is temporarily terminated.

When the count value of the abnormality counter becomes greater than or equal to the threshold value (YES in step S307), it is determined that an abnormality is occurring in the rotation sensor (step S308). Then, the present process is temporarily terminated.

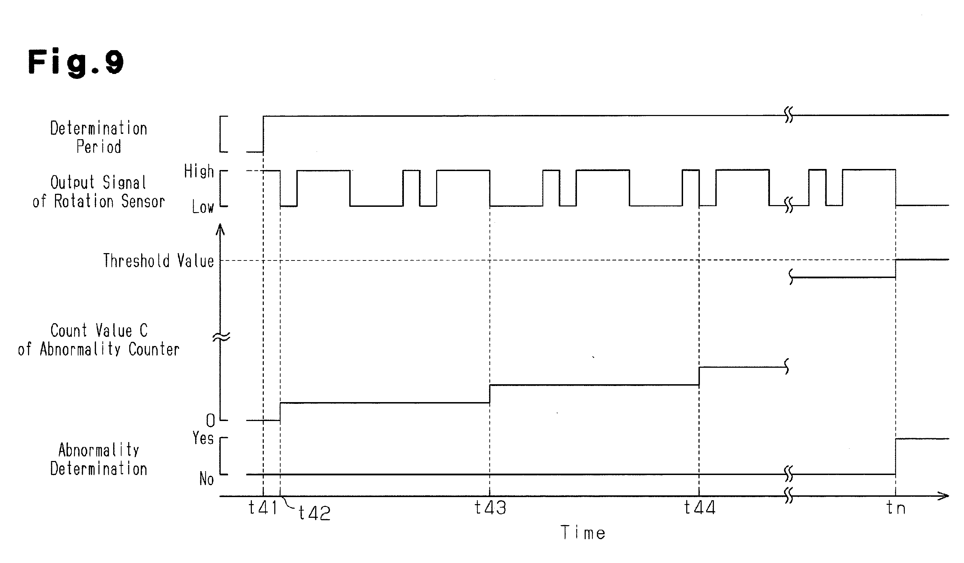

As shown by one example of the execution of the abnormality determination process in Fig. 9, during the determination period (from time t41), whenever the determination condition is satisfied (times t42, t43, t44, and so on), the count value C of the abnormality counter is incremented. When the count value C of the abnormality counter is greater than or equal to the predetermined threshold value (time tn), it is determined that the rotation sensor 40 is abnormal. In this manner, in the present embodiment, the number of determinations that determine that the determination condition is satisfied during the determination period is counted by the manipulation of the count value C of the abnormality counter, and it is determined that the rotation sensor 40 is abnormal when the determination number becomes greater than the predetermined threshold value. Thus, even in a state in which noise or the like during the determination period incidentally causes the rotation sensor 40 to alternately output a pulse signal having an output width indicating rotation in the normal direction and a pulse signal having an output width indicating rotation in the reverse direction, as long as such a state is short, the rotation sensor 40 is not determined as being abnormal. This suppresses erroneous determination that the rotation sensor 40 is abnormal, and allows for accurate determination of an abnormality in the rotation sensor 40.

In the present embodiment, when determined that an abnormality is occurring in the rotation sensor 40 during the abnormality determination process (step S308 in Fig. 8), a fail-safe process described below is subsequently executed.

In the fail-safe process of the present embodiment, the execution of the automatic stop restart control is prohibited. More specifically, automatic stopping of the internal combustion engine 11 in the automatic stopping process is prohibited. When the internal combustion engine 11 has been automatically stopped, engine starting is prohibited using a starting process suitable for restarting the internal combustion engine 11, that is, a starting process suitable for a situation in which the crank angle is determined beforehand. In this case, engine starting is performed using a starting process suitable for normal starting of the internal combustion engine 11 (starting performed by manipulating an operation switch), that is, a starting process suitable for a situation in which the crank angle is unknown. This is because restarting of the internal combustion engine 11 based on the crank angle obtained and stored by the electronic controller 30, that is, the crank angle of which reliability is low due to the abnormality of the rotation sensor 40 would lengthen the time required for engine starting and may cause an engine starting failure.

Further, manipulation of the count value of the crank counter is prohibited when the crank signal NE indicating reverse rotation of the crankshaft 12 is output. That is, there is a strong possibility that rotation of the crankshaft 12 in the reverse direction cannot be properly detected based on the crank signal NE. Thus, such detection is prohibited. Even when an abnormality occurs in which the output signal of the sub-sensor 43 does not shift from a high signal, rotation of the crankshaft 12 in the normal direction can be detected based on a pulse signal having an output width indicating normal rotation in the crank signal NE. Thus, such detection is permitted.

Further, the crank angle obtained by the electronic controller 30 is reset to a preset initial value, which is determined beforehand. When an abnormality occurs in the rotation sensor, the actual crank angle differs from the crank angle obtained by the electronic controller 30 based on the crank signal NE. To end such a situation, the crank angle is temporarily reset.

In this manner, in the present embodiment, when an abnormality occurs in which an output signal of the sub-sensor 43 does not shift from a high signal, the occurrence can be accurately determined. Moreover, by executing fail-safe control based on the determination of the occurrence of an abnormality, the occurrence of the abnormality in the rotation sensor 40 can be properly addressed.

The present embodiment has the advantages described below.
(1) During a period in which the crankshaft 12 only rotates in the normal direction, when one of two pulse signals consecutively output from the rotation sensor 40 has an output width that differs from the output width of the other one of the pulse signals, the rotation sensor 40 is determined as having an abnormality. Thus, if an abnormality occurs in which an output signal of the sub-sensor 43 does not shift from a high signal, in a state in which a pulse signal having an output width indicating normal rotation and a pulse signal having an output width indicating reverse rotation are alternately output from the rotation sensor 40 when the crankshaft 12 rotates in the normal direction, such a state can be recognized to accurately determine the occurrence of an abnormality in the rotation sensor 40.
(2) The determination number in which the [Determination Condition] is determined as being satisfied is counted in the determination period, and the rotation sensor 40 is determined as being abnormal when the determination number becomes greater than or equal to the threshold value. Thus, in a state in which noise or the like incidentally causes the rotation sensor 40 to alternately output pulse signals having different output widths, erroneous determination that the rotation sensor 40 is abnormal is suppressed, and an abnormality in the rotation sensor 40 is accurately determined.
(3) The first determination period in which the engine rotation speed is greater than or equal to the lower limit rotation speed can be set as the determination period in which the crankshaft 12 rotates only in the normal direction.
(4) The second determination period in which the starter motor 17 is in a drive state and the automatic transmission 13 is in a neutral state can be set as the determination period in which the crankshaft 12 rotates only in the normal direction.
(5) When determined that an abnormality is occurring in the rotation sensor 40 during the determination period, automatic stopping of the internal combustion engine 11 in the automatic stopping process and restarting of the internal combustion engine 11 in the restarting process (in detail, engine starting using a starting process suitable for restarting) are both prohibited. This avoids the internal combustion engine 11 being restarted based on a crank angle calculated by the rotation sensor 40 in which an abnormality is occurring, that is, a crank angle having low reliability. Further, problems caused by starting failures of the internal combustion engine 11 can be suppressed.

The above embodiment may be modified as described below.

A starting period in which the starter motor 17 is in a drive state and the vehicle 10 is in a stopped state (traveling speed SPD = "0") may be set as the second determination period. When the vehicle 10 is in the stopped state, it can be determined that the vehicle 10 is not moving rearward due to its weight as described above and that a phenomenon in the which crankshaft 12 rotates in the reverse direction due to rearward movement of the vehicle 10 is not occurring. Thus, with the above configuration, a period ensuring that the crankshaft 12 rotates only in the normal direction can be set as the determination period. Further, a starting period in which the starter motor 17 is in a drive state and the vehicle 10 is in a traveling state (traveling speed SPD > "0") can be set as the second determination period.

From the conditions for determining a second determination period, "the automatic transmission 13 being in a neutral state," "the vehicle 10 being in a stopped state," and "the vehicle 10 being in a traveling state" can be omitted.

Just one of the first determination period and the second determination period may be set as the determination period.

The threshold value of the abnormality determination process (refer to step S307 in Fig. 8) may be changed to any value.

For example, the threshold value may be set to "1" and the rotation sensor 40 may be determined as being abnormal when the [Determination Condition] is satisfied once. To realize a configuration for determining that the rotation sensor 40 is abnormal when the [Determination Condition] is satisfied once, the process of step S306 and the process of step S307 may be eliminated. In this case, during the abnormality determination process, when the determination condition is satisfied (YES in step S305), it is determined that an abnormality is occurring in the rotation sensor (step S308). When the determination condition is not satisfied (NO in step S305), it may be determined that an abnormality is not occurring in the rotation sensor 40 (skip the process of step S308).

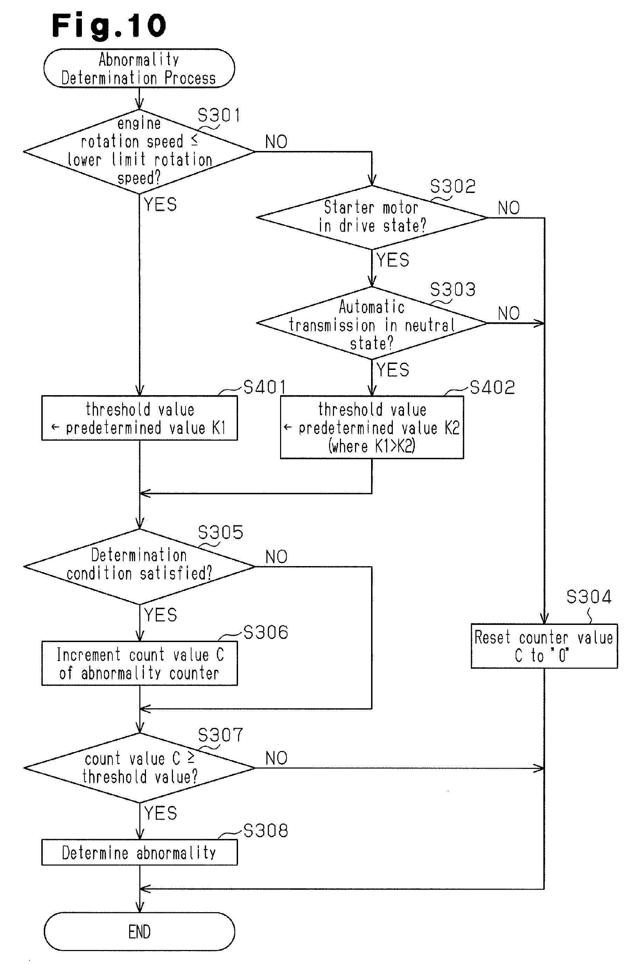

Further, the threshold value for the first determination period and the second determination period may be set by different values. Fig. 10 shows the procedures for executing an abnormality determination process of a modified example. In the series of processes shown in Fig. 10, the same reference characters are given to the processes that are the same as those in the abnormality determination process shown in Fig. 8. As shown in Fig. 10, when determined as the first determination period (YES in step S301), a predetermined value K1 may be set as the threshold value (first threshold value) (step S401). When determined as the second determination period (YES in step S302 and YES in step S303), a predetermined value K2 (where K1 > K2) may be set as the threshold value (second threshold value) (step S402).

As the value set as the threshold value becomes larger, the determination number (in detail, the count value C) has to increase for the rotation sensor 40 to be determined as being abnormal. This allows for the occurrence of an abnormality to be determined with high accuracy. However, this lengthens the time required to determine that the rotation sensor 40 is abnormal. Thus, the fail-safe process cannot be readily executed when the rotation sensor 40 is abnormal. This may lengthen the time for starting the internal combustion engine 11. In this regard, in the above configuration, the first threshold value (predetermined value K1) for the first determination period is set to be greater than the second threshold value (predetermined value K2) for the second determination period. Thus, an abnormality of the rotation sensor 40 can be accurately determined using the relatively large value K1 as the first threshold value for the first determination period. In addition, the occurrence of an abnormality can be readily determined using the relatively small value K2 as the second threshold value for the second determination period to execute the fail-safe process and suppress increases in the starting time. In this manner, in the above configuration, the abnormality determination of the rotation sensor 40 can be properly executed in each of the first determination period and the second determination period.

The present invention may be applied to a rotation sensor having any structure as long as the rotation sensor outputs a pulse signal having an output width that changes in accordance with the shifting direction of an output signal of a main sensor when the condition is satisfied where an output signal of a sub-sensor is a preset value and an output signal of the main sensor is shifted. One example of such a rotation sensor outputs a pulse signal having an output width that indicates normal rotation if an output signal of a sub-sensor is a low signal when an output signal of a main sensor rises and outputs a pulse signal having an output width that indicates reverse rotation if an output signal of the sub-sensor is a low signal when the output signal of the main sensor falls. When an abnormality detection device according to the present invention is applied to the rotation sensor, the occurrence of an abnormality in which the output signal of the sub sensor does not shift from a low signal can be accurately determined.

The present invention may be applied to a hybrid vehicle including an internal combustion engine and an electric motor as vehicle driving sources in addition to a vehicle including only an internal combustion engine as a vehicle driving source.

The present invention may also be applied to a vehicle that does not execute automatic stop restart control.

The present invention is not limited to a rotation sensor that detects rotation of an output shaft of an internal combustion member and may be applied to any rotation sensor that outputs a pulse signal having an output width that changes in accordance with the rotation direction of a rotational body that rotates in two directions (for example, normal direction and reverse direction). The present invention is not limited to a rotation sensor that outputs a pulse signal having a width that changes in accordance with the rotation direction of a rotational body and may be applied, for example, to a rotation sensor that changes other forms of output, such as the voltage level. In such a structure, abnormality of the rotation sensor may be determined when the output form (output width, voltage level, and the like) of one of two pulse signals consecutively output from the rotation sensor during a determination period in which the rotational body rotates only in a predetermined direction (one of the two directions) differs from the output form of the other one of the pulse signals.

In the present embodiment, the output width of the low signal is used as the output mode of the pulse signal. Instead, the output width of the high signal may be used.

### DESCRIPTION OF REFERENCE CHARACTERS

10) vehicle, 11) internal combustion engine, 12) crankshaft, 13) automatic transmission, 14) driving wheels, 17) starter motor, 18) combustion chamber, 19) intake passage, 20) fuel injection valve, 21) ignition valve, 22) piston, 23) exhaust passage, 24) throttle valve, 30) electronic controller, 31) speed sensor, 32) accelerator sensor, 33) idle switch, 34) brake switch, 36) throttle sensor, 37) air amount sensor, 38) coolant temperature sensor, 40) rotation sensor, 41) signal rotor, 42) main sensor, 43) sub-sensor, 44) output device.

## Claims

1. An abnormality determination device for a rotation sensor that detects rotation of a rotational body, wherein the rotation sensor includes a first sensor portion and a second sensor portion that output a pulse signal whenever the rotational body is rotated by a predetermined angle, the first and second sensor portions output signals having phases shifted from each other, and the rotation sensor is configured so that when a condition is satisfied where an output signal of the first sensor portion is a predetermined value and an output signal of the second sensor is shifted, the rotation sensor outputs a pulse signal in a form that changes in accordance with a shifting direction of the output signal of the second sensor portion, the abnormality determination device comprising:
a determination unit that determines that the rotation sensor is abnormal when an output form of one of two pulse signals consecutively output from the rotation sensor differs from an output form of the other one of the pulse signals during a determination period in which the rotational body rotates only in a predetermined direction.

2. The abnormality determination device according to claim 1, wherein the determination unit counts a determination number in which the output form of one of the two pulse signals differs from the output form of the other one during the determination period and determines that the rotation sensor is abnormal when the determination number is greater than or equal to a threshold value.

3. The abnormality detection device according to claim 1 or 2, wherein
the rotational body is an output shaft of an internal combustion engine, and
the determination period is a period in which the output shaft rotates only in a normal direction.

4. The abnormality detection device according to claim 3, wherein the determination period is a period in which the output shaft rotates at a lower limit rotation speed or greater in which the output shaft does not rotate in a reverse direction.

5. The abnormality determination device according to claim 3 or 4, wherein
the output shaft is rotated in a normal direction by a starter motor when the internal combustion engine is started, and
the determination period is a start period in which the starter motor is in a drive state.

6. The abnormality determination device according to claim 2, wherein
the rotational body is an output shaft of an internal combustion engine,
the output shaft is rotated in a normal direction by a starter motor when the internal combustion engine is started,
the determination period includes a first determination period, in which the output shaft rotates at a lower limit rotation speed or greater in which the output shaft does not rotate in a reverse direction, and a second determination period, which is a start period in which the starter motor is in a drive state, and
the threshold value includes a first threshold value, which corresponds to the first determination period, and a second threshold value, which corresponds to the second determination period, wherein the first threshold value is greater than the second threshold value.

7. The abnormality determination device according to claim 5 or 6, wherein
the internal combustion engine is installed as a drive source in a vehicle, and
the start period is a period in which the starter motor is in the drive state and a transmission connected to the internal combustion engine is in a neutral state cutting off power transmission.

8. The abnormality determination device according to claim 5 or 6, wherein
the internal combustion engine is installed as a drive source in a vehicle, and
the start period is a period in which the starter motor is in the drive state and the vehicle is in a stopped state.

9. The abnormality determination device according to any one of claims 3 to 8, further comprising:
a control unit that executes automatic stop restart control for automatically stopping the internal combustion engine when a predetermined stop condition is satisfied and automatically starting the internal combustion engine when a predetermined restarting condition is satisfied, and
a prohibition unit that prohibits execution of the automatic stop restart control when abnormality of the rotation sensor is detected in the determination period.
